(19) Europäisches Patentamt
European Patent Office
Office européen des brevets

(11) EP 3 161 056 B1

(12) EUROPEAN PATENT SPECIFICATION

(45) Date of publication and mention of the grant of the patent:
**07.06.2023 Bulletin 2023/23**

(21) Application number: **15732649.7**

(22) Date of filing: **26.06.2015**

(51) International Patent Classification (IPC):
***H01B 3/44*** *(2006.01)*

(52) Cooperative Patent Classification (CPC):
(C-Sets available)
**H01B 3/441; H01B 3/447;** C08K 3/045 (Cont.)

(86) International application number:
**PCT/EP2015/064579**

(87) International publication number:
**WO 2015/197842 (30.12.2015 Gazette 2015/52)**

(54) **POLYOLEFIN COMPOSITION FOR POWER CABLES**

POLYOLEFINZUSAMMENSETZUNGEN FÜR STROMKABEL

COMPOSITION DE POLYOLÉFINE POUR LES CÂBLES ÉLÉCTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2014 EP 14174789**

(43) Date of publication of application:
**03.05.2017 Bulletin 2017/18**

(73) Proprietor: **Borealis AG**
**1020 Vienna (AT)**

(72) Inventors:
- **ANDERSSON, Mats**
  **449 51 Alafors (SE)**
- **JARVID, Markus**
  **449 43 Nol (SE)**
- **KROON, Renee**
  **Mawson Lakes, SA 5095 (AU)**
- **GUBANSKI, Stanislaw**
  **412 61 Göteborg (SE)**
- **MÜLLER, Christian**
  **412 70 Göteborg (SE)**
- **JOHANSSON, Anette**
  **412 82 Göteborg (SE)**

(74) Representative: **Kador & Partner Part mbB**
**Corneliusstraße 15**
**80469 München (DE)**

(56) References cited:
**EP-A1- 1 518 891 WO-A1-94/19423**

- **DATABASE CA [Online] CHEMICAL ABSTRACTS SERVICE, COLUMBUS, OHIO, US; 2 July 2004 (2004-07-02), KIRITANI, HIDEKI: "Fullerene-incorporated thermoplastic resin compositions with modified heat resistance and manufacture thereof", XP002728201, retrieved from STN Database accession no. 2004:529802 -& JP 2004 182768 A (MITSUBISHI CHEM CORP) 2 July 2004 (2004-07-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 161 056 B1

(52) Cooperative Patent Classification (CPC): (Cont.)

C-Sets
**C08K 3/045, C08L 23/00;**
C08K 3/045, C08L 23/04;
C08K 3/045, C08L 23/10

## Description

The present invention relates to a cable or a wire comprising a layer which comprises a polyolefin composition comprising a fullerene composition with improved electrical breakdown strength obtained by increasing the electrical tree initiation field, in particular a medium, high or extra high voltage cable, and to the use of said polyolefin composition or a master batch comprising said fullerene composition for the production of a wire or cable, in particular a medium, high or extra high voltage cable.

A typical medium voltage power cable, usually used for voltages from 6 to 72 kV, a typical high voltage cable used for voltages higher than 72 kV, and a typical extra high voltage cable used for voltages higher than 220 kV, comprises one or more conductors in a cable core that is surrounded by several layers of polymeric materials, including an inner semiconducting layer, followed by an insulating layer, and then an outer semiconducting layer. These layers are normally cross-linked. To these layers, further layers may be added, such as a metallic tape or wire shield, screens, and, finally, outermost jacketing layer(s). The layers of the cable are based on different types of polymer compositions. As insulating materials, today cross-linked polyolefins like cross-linked low density polyethylene are predominantly used.

It is a constant aim of cable manufacturers to increase the electrical breakdown strength of cable materials, in particular cable insulation materials, in order to achieve greater reliability or to develop new cable constructions where the insulation is subjected to higher stress. Defects in the insulation set a limit on the minimum insulation thickness and thereby maximum electrical design stress applied to the cable. To secure high reliability on high stress cable constructions it is known to reduce the amount of contaminants in the insulation material. However, nowadays already super clean materials are used for insulation, and improvements in electrical breakdown strength by further reduction of contaminants are associated with a significant increase in cost.

It is furthermore known to use active additives, namely so called voltage stabilisers to increase the initiation field of electrical trees, in order to increase the electrical breakdown strength of cable insulation materials. For example, EP 25 45114 discloses a general class of benzil derivative used to that purpose.

However, there is still the need for voltage stabilisers which improve the electrical breakdown strength of polyolefin compositions used for medium/high/extra high voltage cable insulation. Such voltage stabiliser compounds should usually have a low ionisation potential to decrease the energy of high energy electrons and hence increase the electrical breakdown strength efficiently (see e.g. A.C. Ashcraft, R.M. Eichhorn, and S.R.G., "Laboratory Studies of Treeing in Solid Dielectrics and Voltage Stabilization of Polyethylene" presented as I.E.E.E. International Symposium on Electrical Insulation, Montreal, Canada, 1978).

At the same time, the compounds must be soluble in the polyolefin, usually cross-linked polyethylene, used as a matrix polymer in the composition, and, furthermore, must show low migration tendency, so that the loss of the compound in the insulation material with time is as low as possible.

Still further, as usually insulating compositions are cross-linked polyolefins, the voltage stabiliser must as far as possible be compatible to commonly used cross-linking agents, such as organic peroxides, so that, on the one hand, the cross-linking process is not negatively affected, and, on the other hand, the voltage stabiliser is not reacting or decomposing which would reduce its efficiency or even, in the worst case, render it inactive. Of course, the voltage stabiliser should also be compatible in this sense with regard to all other components of the polyolefin composition.

Furthermore, in US8435713 there are disclosed compositions of mixed fullerene derivatives with utility in organic semiconductors.

It is thus an object of the invention, to provide a cable or wire comprising a layer which comprises a polyolefin composition comprising a voltage stabiliser for further improving the electrical breakdown strength of a polyolefin composition, which has the above-mentioned properties. In particular the voltage stabiliser provides a significant improvement on electrical tree initiation field, has preferably also a good solubility in the polyolefin matrix and a low migration tendency together with a high efficiency meaning that only a small amount needs to be added to the matrix to obtain the wanted increase in tree initiation field, and more preferably is compatible with regard to other components of the polyolefin composition, in particular to cross-linking agents.

The above objects have now surprisingly been achieved by a polyolefin composition, and a master batch, both comprising specific fullerene compositions.

The present invention therefore provides a cable or wire comprising a layer which comprises a polyolefin composition comprising:

a polyolefin (A),

a fullerene composition (B) which comprises:

a $C_{60}$ fullerene or a $C_{60}$ chemical derivative selected from the group consisting of methanofullerene derivatives, PCBM derivatives, ThCBM derivatives, Prato derivatives, Bingel derivatives, diazoline derivatives, azafulleroid

derivatives, ketolactam derivatives, and Diels-Alder derivatives; or
a $C_{70}$ fullerene or a $C_{70}$ chemical derivative selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or
a blend of fullerenes.

The polyolefin composition used in the present invention comprises a fullerene composition, which fullerene composition comprises:

a $C_{60}$ fullerene, see Formula I below,

Formula I

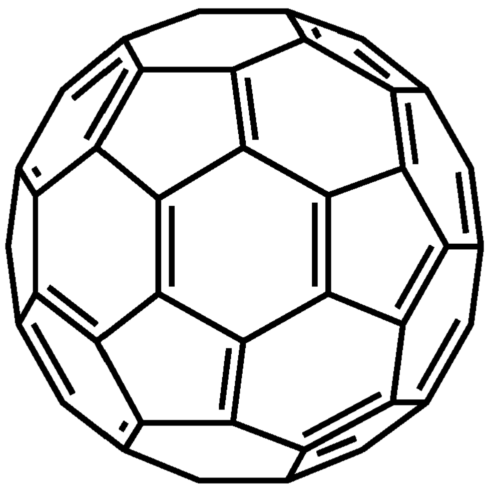

$C_{60}$ Fullerene

or a $C_{60}$ chemical derivative selected from the group consisting of methanofullerene derivatives (for example PCBM or ThCBM), PCBM derivatives (e.g. Phenyl-$C_{61}$-Butyric-Acid-Methyl-Ester ([60]PCBM), see Formula II below),

Formula II

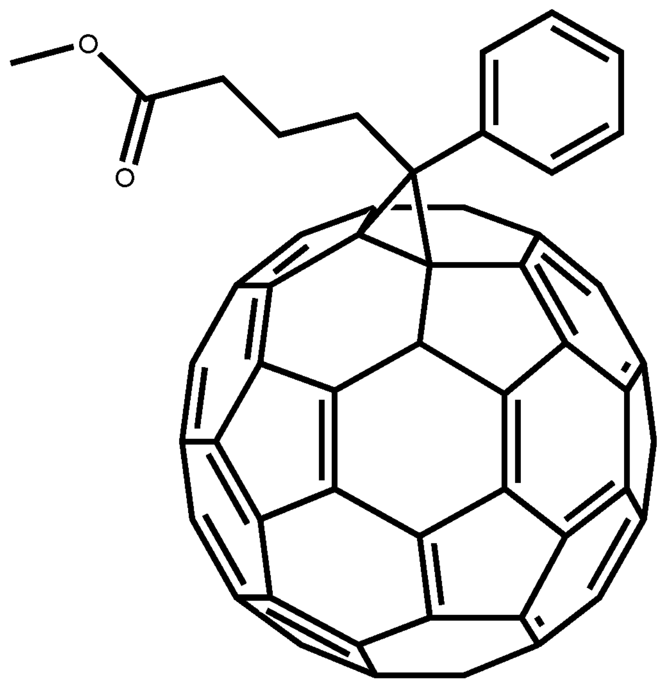

[60]PCBM

ThCBM derivatives (e.g. Thiophenyl-$C_{61}$-Butyric-Acid-Methyl-Ester ([60]ThCBM), Prato derivatives (2-Aza-Propano-($C_{n+2}N$) fullerenes), Bingel derivatives (see US8435713), diazoline derivatives (see US8435713), azafulleroid derivatives (see US8435713), ketolactam derivatives (see US8435713), and Diels-Alder derivatives (see US8435713); or

a $C_{70}$ fullerene (compare with $C_{60}$ fullerene above) or a $C_{70}$ chemical derivative (compare with the corresponding $C_{60}$ chemical derivative above) selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or

a blend of fullerenes.

Further, the $C_{60}$ chemical derivative and the $C_{70}$ chemical derivative are both members of the same class of chemical derivatives.

In a further embodiment of the present invention, said polyolefin composition comprises a fullerene composition (B) which is a $C_{60}$ fullerene or a $C_{60}$ chemical derivative selected from the group consisting of methanofullerene derivatives, PCBM derivatives, ThCBM derivatives, and Prato derivatives; or
a $C_{70}$ fullerene or a $C_{70}$ chemical derivative selected from the group consisting of methanofullerene derivatives, PCBM derivatives, ThCBM derivatives and Prato derivatives.

In an even further embodiment of the present invention, said polyolefin composition comprises a fullerene composition (B) which is a $C_{60}$ fullerene or a $C_{60}$ chemical derivative selected from the group consisting of methanofullerene derivatives and PCBM derivatives; or
a $C_{70}$ fullerene or a $C_{70}$ chemical derivative selected from the group consisting of methanofullerene derivatives and PCBM derivatives.

In still a further embodiment of the present invention, said polyolefin composition comprises a fullerene composition (B) which is a $C_{60}$ fullerene or Phenyl-$C_{61}$-butyric acid methyl ester ([60]PCBM) ; or a $C_{70}$ fullerene or Phenyl-$C_{71}$-butyric acid methyl ester (the [70]PCBM analogue of [60]PCBM) .

In a further embodiment of the present invention, said polyolefin composition comprises a fullerene composition (B) which is a $C_{60}$ fullerene or [60]PCBM.

A further embodiment of the present invention is disclosed, wherein said polyolefin composition comprises a fullerene composition (B) which is [60]PCBM.

In a further embodiment of the present invention, said polyolefin composition comprises a fullerene composition (B) which is a $C_{60}$ fullerene.

Further, said fullerene composition may comprise a blend of fullerenes which blend includes two or more selected from the group consisting of the $C_{60}$ fullerene, $C_{70}$ fullerene, all $C_{60}$ chemical derivatives, all $C_{70}$ chemical derivatives, any higher fullerenes (for example $C_{76}$ fullerene, $C_{78}$ fullerene, and $C_{84}$ fullerene (e.g. [84]PCBM (compare with [60]PCBM above)), and any chemical derivatives of such higher fullerenes.

Furthermore, said fullerene composition may comprise a blend of fullerenes, wherein said blend may consist of, for example, 80% wt of $C_{60}$ fullerene or $C_{60}$ chemical derivatives; 20% wt of $C_{70}$ fullerene or $C_{70}$ chemical derivatives; and small quantities of higher fullerenes or any chemical derivatives of such higher fullerenes.

Further, said fullerene composition may comprise a blend of fullerenes, wherein said blend may consist of, for example, 80% wt of $C_{60}$ chemical derivatives; 20% wt of $C_{70}$ chemical derivatives; and small quantities of chemical derivatives of said higher fullerenes.

In a further embodiment of the present invention, said fullerene composition comprises a blend of fullerenes, wherein said blend may comprises about 80% wt of [60]PCBM, about 20% wt of [70]PCBM, and, optionally, small quantities of chemical derivatives of said higher fullerenes, e.g. higher PCBM.

Still further, said fullerene composition may comprise a blend of fullerenes, wherein said blend may consist of, for example, 65% wt of $C_{60}$ fullerene or $C_{60}$ chemical derivatives; 30% wt of $C_{70}$ fullerene or $C_{70}$ chemical derivatives; and 5% wt of higher fullerenes or any chemical derivatives of such higher fullerenes.

Even further, said fullerene composition may comprise a blend of fullerenes, wherein said blend may consist of, for example, 65% wt of $C_{60}$ fullerene or $C_{60}$ chemical derivatives; 30% wt of $C_{70}$ fullerene or $C_{70}$ chemical derivatives; and 5% wt of chemical derivatives of said higher fullerenes.

In a further embodiment of the present invention, said fullerene composition comprises a blend of fullerenes, wherein said blend may comprises about 65% wt of [60]PCBM, about 30% wt of [70]PCBM, and about 5% wt of chemical derivatives of said higher fullerenes, e.g. higher PCBM.

It has been found that the use of fullerene compositions (B), as described herein, as voltage stabilisers yields insulating polyolefin compositions with significantly improved electrical breakdown strength. Furthermore, the compounds have a good solubility in the polyolefin matrix and a low migration tendency, and are compatible with the other components of the polyolefin composition, in particular with cross-linking agents.

Furthermore, preferably the fullerene compositions (B) are free of halogen substituents or substituents containing halogen atoms.

Further, the fullerene compositions (B) may, to various degree, bind to polyolefin (A).

Alternatively, the fullerene compositions (B) may be free of any bond to polyolefin (A).

Preferably, the fullerene composition (B) is present in the composition in an amount of 0.0002 to 2 wt%, more preferably 0.002 to 1 wt%, still more preferably from 0.01 to 0.8 wt%, still more preferably 0.02 to 0.6 wt%, and most preferably from 0.02 to 0.4 wt%. Further preferred ranges for fullerene composition (B) present in the composition are 0.01 to 0.6 wt%, 0.01 to 0.4 wt% or 0.01 to 0.3 wt%.

Polyolefin (A) may be any polyolefin material suitable to be used for the production of a layer of cable, preferably power cable layer, more preferably an insulation layer of a power cable.

Polyolefin (A) preferably comprises, or consists of, a polyethylene or polypropylene. Where herein it is referred to a "polymer", e.g. polyethylene, this is intended to mean both a homo- and copolymer, e.g. an ethylene homo- and copolymer.

Where polyolefin (A) comprises, or consists of, a polyethylene, the polymer may be produced in a high pressure process or in a low pressure process in the presence of a catalyst, for example a chromium, Ziegler-Natta or single-site catalyst, resulting in either unimodal or multimodal polyethylene.

Where polyolefin (A) comprises, or consists of, a polypropylene, this may be a unimodal or multimodal propylene homo- or copolymer and/or a heterophasic polypropylene.

Furthermore, where polyolefin (A) comprises, or consists of, a polypropylene, it is preferred that it has an $MFR_2$ (230°C, 2.16 kg) of from 0.001 to 25 g/10min.

In a preferred embodiment, polyolefin (A) comprises or consists of an ethylene homo- or copolymer. In the case of an ethylene copolymer, it is preferred that it includes 0.001 to 50 wt%, more preferably 0.1 to 40 wt%, still more preferably 0.1 to 35 wt%, still more preferably 0.1 to 30 wt%, even more preferably 0.1 to 25 wt% of one or more comonomers.

Preferably, the density of the ethylene homo or- copolymer is higher than 0.860 g/cm$^3$.

Furthermore, preferably the density of the ethylene homo or- copolymer is not higher than 0.960 g/cm$^3$.

The $MFR_2$ (2.16 kg, 190 °C) of the ethylene homo or- copolymer preferably is from 0.01 to 50 g/10min, more preferably is from 0.1 to 20 g/10min, still more preferably is from 0.2 to 15 g/10min, and most preferably is from 0.2 to 10 g/10 min.

Still further, it is preferred that polyolefin (A) comprises or consists of a polyethylene which has been produced

by a high pressure process using free radical polymerization. The polymerization generally is performed at pressures of 120 to 350 MPa and at temperatures of 150 to 350 °C.

The polyethylene may be an ethylene homopolymer or a copolymer of ethylene.

As a comonomer in the ethylene copolymer, a non-polar alpha-olefin may be used, either alone or in addition with further types of comonomers. Such alpha-olefins may also comprise further unsaturation present e.g. in polyunsaturated comonomers such as dienes.

Preferred non polar alpha olefins are $C_3$-$C_{20}$ alpha olefins, preferably $C_3$ to $C_{10}$ alpha-olefins are used as comonomers, such as propylene, 1-butene, 1-hexene, 4-methyl-1-pentene, styrene, 1-octene, 1-nonene, polyusaturated comonomers preferably $C_8$ to $C_{14}$ non-conjugated dienes, such as a $C_8$ to $C_{14}$ non-conjugated diene, e.g. 1,7-octadiene, 1,9-decadiene, 1,11-dodecadiene, 1,13-tetradecadiene, or any mixture thereof. Further examples of polyunsaturated comonomers are dienes like 7-methyl-1,6-octadiene, 9-methyl-1,8-decadiene, or mixtures thereof can be mentioned.

It is also possible to use polar comonomers, optionally in combination with the non polar alpha olefin comonomer(s). Preferably, as polar monomer units, compounds containing hydroxyl groups, alkoxy groups, carbonyl groups, carboxyl groups, ether, and ester groups are used.

Still more preferably, the polar monomer units are selected from the group of alkyl acrylates, alkyl methacrylates, and vinyl acetates or mixtures therefrom. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate, or any mixture thereof.

If polar comonomer units are present in polyolefin (A) it is preferred that the amount is as defined above and below.

If the polyethylene is a copolymer, it is preferred that it includes 0.001 to 50 wt%, more preferably 0.1 to 40 wt%, still more preferably 0.1 to 35 wt%, still more preferably 0.1 to 30 wt%, even more preferably 0.1 to 25 wt%, of one or more comonomers.

Polyolefin (A) preferably is cross-linkable. Cross-linking may be achieved e.g. by further including a cross-linking agent into the composition or by the incorporation of cross-linkable groups into polyolefin (A).

In a preferred embodiment, the polymer composition according to the present invention further comprises a cross-linking agent.

In the context of the present invention, a cross-linking agent is defined to be any compound capable to generate radicals which can initiate a cross-linking reaction. Preferably, the cross-linking agent contains at least one - O-O- bond or at least one -N=N- bond.

The cross-linking agent, e.g. a peroxide, is preferably added in an amount of less than 10 wt%, more preferably 0.01 to 5.0 wt%, still more preferably 0.01 to 3.0 wt%, even more preferably 0.05 to 2.6 wt%, based on the weight of the cross-linkable polymer composition.

As peroxides as non-limiting examples of cross-linking agents are i.a. di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, bis(tertbutylperoxyisopropyl)benzene, butyl-4,4-bis(tert-butylperoxy)-valerate, 1,1-bis(tert-butylperoxy)-3,3,5-trimethylcyclohexane, tert-butylperoxybenzoate, dibenzoylperoxide, 2,5-dimethyl-2,5-di(benzoylperoxy)hexane, 1,1-di(tert-butylperoxy)cyclohexane, 1,1-di(tert amylperoxy)cyclohexane, or any mixtures thereof.

Preferably, the peroxide is selected from 2,5-di(tert-butylperoxy)-2,5-dimethylhexane, di(tert-butylperoxy-isopropyl)benzene, dicumylperoxide, tert-butylcumylperoxide, di(tert-butyl)peroxide, or mixtures thereof. Most preferably, the peroxide is dicumylperoxide.

It is preferred that cross-linking is effected by including a cross-linking agent, such as peroxide in any of the above mentioned embodiments, into the composition.

However, cross-linking may also be achieved by hydrolysable silane groups which may be present in polyolefin (A). Thus, polyolefin (A) may also comprise or consist of a cross-linkable polyolefin containing hydrolysable silane groups. Hydrolysable silane groups are typically crosslinked by a condenstation catalyst in the presence of water.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

In case polyolefin (A) comprises or consists of an unsaturated polyolefin, i.e. a polyolefin comprising carbon-carbon double bonds, then preferably the polyolefin has a total amount of carbon-carbon double bonds/1000 carbon atoms of 0.1 or more, more preferably of 0.2 or more, still more preferably of 0.3 or more, and most preferably more than 0.37.

The upper limit of the amount of carbon-carbon double bonds present in the polymer is not limited and may preferably be less than 5.0/1000 carbon atoms, preferably less than 3.0/1000 carbon atoms, or more preferably less than 2.5 /1000 carbon atoms.

When used in combination with the unsaturated polyolefin, the term "total amount of carbon-carbon double bonds" refers to those double bonds originating from vinyl groups, vinylidene groups and trans-vinylene groups. The

amount of each type of double bond is measured as indicated in the experimental part.

The incorporation of the total amount of carbon-carbon double bonds within the polyolefin component enables to accomplish improved cross-linking properties.

The total amount of vinyl groups is preferably higher than 0.02/1000 carbon atoms, more preferably higher than 0.05/1000 carbon atoms, still more preferably higher than 0.08/1000 carbon atoms, and most preferably higher than 0.11/1000 carbon atoms.

Preferably, the total amount of vinyl groups is lower than 4.0/1000 carbon atoms.

Preferred unsaturated polyolefin (A) is an unsaturated polyethylene or an unsaturated polypropylene. More preferably, the unsaturated polyolefin is an unsaturated polyethylene and more preferably an unsaturated homo or copolymer or even more preferably an unsaturated polyethylene homo or copolymer.

Preferably, the unsaturated polyolefin is prepared by copolymerising at least one olefin monomer with at least one polyunsaturated comonomer.

In a preferred embodiment, the polyunsaturated comonomer consists of a straight carbon chain with at least 8 carbon atoms and at least 4 carbon atoms between the non-conjugated double bonds, of which at least one is terminal.

Siloxanes having the following formula:

$CH_2=CH-[Si(CH_3)_2-O]_n-Si(CH_3)_2-CH=CH_2$, wherein n=1 or higher

can also be used as a polyunsaturated comonomer. As an example, divinylsiloxanes, e.g. alpha,omega-divinylsiloxane, can be mentioned.

In addition to the polyunsaturated comonomer, further comonomers can optionally be used, preferably non polar $C_3$-$C_{20}$ alpha olefin comonomers, more preferably $C_3$ to $C_{10}$ alpha-olefin comonomers without further unsaturation, such as propylene, 1-butene, 1-hexene, 4-methyl-1-pentene, styrene, 1-octene, and/or 1-nonene, polar comonomers or any mixture thereof.

It is also possible to use polar comonomers, optionally in combination with the non polar alpha olefin comonomer(s). Preferably, as polar monomer units, compounds containing hydroxyl groups, alkoxy groups, carbonyl groups, carboxyl groups, ether, and ester groups are used.

Still more preferably, the polar monomer units are selected from the group of alkyl acrylates, alkyl methacrylates, and vinyl acetates or mixtures therefrom. Further preferred, the comonomers are selected from $C_1$- to $C_6$-alkyl acrylates, $C_1$- to $C_6$-alkyl methacrylates, and vinyl acetate. Still more preferably, the polar copolymer comprises a copolymer of ethylene with $C_1$- to $C_4$-alkyl, such as methyl, ethyl, propyl or butyl acrylates or vinyl acetate, or any mixture thereof.

If polar comonomer units are present in polyolefin (A) it is preferred that the amount is as defined above.

When preparing the unsaturated polyolefin such as an unsaturated polyethylene in a high pressure process, the polymerisation is generally performed at pressures in the range of 120 to 350 MPa and at temperatures in the range of 150 to 350 °C.

The polyolefin can be unimodal or multimodal, e.g. bimodal.

In a preferred embodiment, the polyolefin (A) as polyethylene or the preferably unsaturated polyethylene contains at least 50 wt-% ethylene monomer units.

Polyethylene, or preferably unsaturated polyethylene, of low density is preferred.

In addition to the components polyolefin (A) and fullerene composition (B), the polymer composition may further comprise components, which may, for example, be any type of other polymer.

In one embodiment, the polymer composition of the invention further comprises a copolymer (C), which may be a polar or unpolar copolymer.

If copolymer (C) is a polar copolymer, said polar copolymer may preferably be an olefin copolymer, more preferably propylene or ethylene copolymer containing polar comonomers preferably the ones defined above.

Optionally, the polymer composition further comprises a scorch retarder. In the context of the present invention, a "scorch retarder" is defined to be a compound that reduces the formation of scorch during extrusion of a polymer composition, at typical extrusion temperatures used, if compared to the same polymer composition extruded without said compound. Besides scorch retarding properties, the scorch retarder may simultaneously result in further effects like boosting, i.e. enhancing cross-linking performance during the cross-linking step.

Preferred scorch retarders are unsaturated dimers of aromatic alphamethyl alkenyl monomers, such as 2,4-di-phenyl-4-methyl-1-pentene, substituted or unsubstituted diphenylethylene, quinone derivatives, hydroquinone derivatives, monofunctional vinyl containing esters and ethers, monocyclic hydrocarbons having at least two or more double bonds, or mixtures thereof. More preferably, the scorch retarder is selected from 2,4-diphenyl-4-methyl-1-pentene, substituted or unsubstituted diphenylethylene, or mixtures thereof.

Preferably, the amount of scorch retarder is within the range of 0.005 to 1.0 wt%, more preferably within the range of 0.001 to 0.8 wt%, based on the weight of the cross-linkable polyolefin composition. Further preferred ranges

are 0.001 to 0.75 wt%, 0.005 to 0.70 wt% and 0.01 to 0.50 wt%, based on the weight of the cross-linkable polyolefin composition.

The polymer composition may contain further additives, such as antioxidant(s), stabiliser(s), processing aid(s), and/or cross-linking booster(s). As antioxidant, sterically hindered or semi-hindered phenols, aromatic amines, aliphatic sterically hindered amines, organic phosphates, thio compounds, and mixtures thereof, can be mentioned.

Typical cross-linking boosters may include compounds containing at least 1, preferably at least 2, unsaturated groups, e.g. vinyl or an allyl groups, such as an aliphatic or aromatic compound, an ester, an ether, or a ketone, which contains at least 1, preferably at least 2, unsaturated group(s), such as a cyanurate, an isocyanurate, a phosphate, an ortho formate, an aliphatic or aromatic ether, or an allyl ester of benzene tricarboxylic acid. Examples of esters, ethers and ketones are compounds selected from general groups of diacrylates, triacrylates, tetraacrylates, triallylcyanurate, triallylisocyanurate, or any mixtures thereof, e.g. triallylcyanurate, triallylisocyanurate, and di-, tri- or tetra-acrylates.

As further additives, flame retardant additives, acid scavengers, inorganic filler(s), preferably selected from carbon black or flame retardant filler, water-tree retardant(s) and other voltage stabiliser(s) can be mentioned.

If an antioxidant, optionally a mixture of two or more antioxidants, is used, the added amount can range from 0.005 to 2.5 wt%, based on the weight of the polymer composition.

In general, if a polyethylene is used in the composition, the antioxidant(s) are preferably added in an amount of 0.005 to 1.5 wt%, more preferably, 0.01-1.2 wt%, even more preferably 0.02 to 0.80 wt%, based on the weight of the polymer composition.

Similarly, if a polypropylene is used in the composition, the antioxidant(s) are preferably added in an amount of 0.005 to 2 wt%, more preferably 0.01 to 1.5 wt%, even more preferably 0.05 to 1 wt%, based on the weight of the polymer composition.

Further additive(s) may be present in an amount of 0.001 to 5 wt%, more preferably 0.005 to 3 wt%, and still more preferably 0.005 to 2 wt%, based on the weight of the polymer composition. Flame retardant additives and inorganic fillers can be added in higher amounts.

If used for semiconductive layers, the composition may comprise conductive fillers in usual amounts, preferably in an amount of less than 60 wt%, more preferably from 1 to 50 wt%.

The $MFR_2$ (2.16 kg, 190 °C) of the polymer composition preferably is from 0.01 to 50 g/10min, more preferably is from 0.1 to 20 g/10min, and most preferably is from 0.2 to 10 g/10min when no flame retardant additives nor inorganic filler is present.

The polyolefin (A) and the fullerene composition (B), optionally in combination with one or more optional additives discussed above, can be blended by any conventional blending technique to result in the polymer composition of the invention.

The polymer composition preferably contains carbon-carbon double bonds in an amount of at least 0.1/1000 carbon atoms, or preferably at least 0.2/1000 carbon atoms or more preferred 0.30/1000 carbon atoms. The upper limit of the amount of carbon-carbon double bonds present in the polymer composition is not limited and may preferably be of less than 5.0/1000 carbon atoms, preferably of less than 3.0/1000 carbon atoms, or more preferably of less than 2.5/1000 carbon atoms.

The total amount of double bonds of the cross-linkable polymer composition is based on vinyl, vinylidene and trans-vinylene groups/1000 carbon atoms of component (A) and/or any further components in the polymer composition comprising such groups.

C-C double bonds present in the polymer composition include vinyl groups and the total amount of said vinyl groups is, in the given preference order, of at least 0.02/1000 carbon atoms, at least 0.05/1000 carbon atoms, at least 0.08/1000 carbon atoms, at least 0.10/1000 carbon atoms, or of at least 0.11/1000 carbon atoms.

The upper limit of the total amount of the vinyl groups present in the polymer composition is typically, in the given preference order, of up to 4.0/1000 carbon atoms, of up to 3.0/1000 carbon atoms, up to 2.5/1000 carbon atoms, or of up to 2.0/1000 carbon atoms.

Accordingly, the total amount the vinyl groups, if present, contributes to the total amount of C-C double bonds present in the polymer composition. The total amount of vinyl groups can e.g. consist of any the above mentioned vinyl groups from the polymer and, if present, added other additives such as boosters, scorch retarders or other further additive(s). From the polymer composition described above, a cross-linked composition can be prepared by blending with a cross-linking agent, followed by treatment under cross-linking conditions, thereby increasing the cross-linking level. Cross-linking can be effected by treatment at increased temperature, e.g. at a temperature of at least in the range of 150-160°C. When peroxides are used, cross-linking is generally initiated by increasing the temperature to the decomposition temperature of the corresponding peroxide. When the peroxide decomposes, radicals are generated from the peroxide. These radicals then initiate the cross-linking reaction.

The total amount of additive(s) in the polyolefin composition according to the invention is generally 0.05 to 15 wt%, preferably 0.1 to 12 wt%, more preferably 0.1 to 10 wt%.

From the polymer composition of the present invention, a multilayered article can be prepared wherein at least

one layer comprises said polymer composition. When cross-linking is initiated, a cross-linked multilayered article is obtained. Preferably, the multilayered article (either cross-linked or not) is a cable, preferably a power cable.

In the context of the present invention, a power cable is defined to be a cable transferring energy operating at any voltage. The voltage applied to the power cable can be alternating (AC), direct (DC), or transient (impulse).

In a preferred embodiment, the multilayered article is a power cable operating at voltages higher than 1 kV. In other preferred embodiments, the power cable prepared according to the present invention is operating at 6 kV or higher.

The power cable can be prepared in a process wherein the composition of the present invention, optionally in combination with a cross-linking agent, is applied onto a substrate by extrusion. In such an extrusion process, the sequence of mixing the components of the composition can be varied, as explained below.

According to a preferred embodiment, the polyolefin (A), optionally in combination with other polymer component(s), and the fullerene composition (B) are mixed with each other and possibly with further additive(s), either on solid pellets or powder of the different polymer components or by melt mixing, followed by forming pellets from the melt.

Subsequently, if used, the cross-linking agent, preferably a peroxide, and optionally a scorch retarder and/or a cross-linking booster are added to the pellets or powder in a second step. Alternatively, the scorch retarder and/or cross-linking booster could already be added in the first step, together with the additives. The final pellets are fed to the extruder, e.g. a cable extruder.

According to another preferred embodiment, instead of a two-step process, the polyolefin (A) and any further polymeric component(s) of the composition, preferably in the form of pellets or powder, fullerene composition (B) and, optionally, the further additives, cross-linking agent, and/or scorch retarder, are added to a compounding extruder, single or twin screw. Preferably, the compounding extruder is operated under careful temperature control.

According to another preferred embodiment, a mix of fullerene composition (B) with all other additives, i.e. including antioxidant (s) and cross-linking agent and optionally a scorch retarder and/or further additives such as a cross-linking booster, are added onto the pellets or powder made of the polyolefin (A) and optionally other polymer component(s).

According to another preferred embodiment, pellets made of the polyolefin (A) and fullerene composition (B), optionally further containing further polymeric components and additional further additive(s), are prepared in a first step, e.g. by melt mixing. These pellets, obtained from the melt mixing, are then fed into the cable extruder. Optionally, subsequently, cross-linking agent and optionally a scorch retarder and/or a cross-linking booster are either fed prior to the hopper, in the hopper or directly into the cable extruder and optionally together with further polymeric components if they have not been added in the first step. Alternatively, cross-linking agent and/or scorch retarder and/or cross-linking booster are already added to the pellets before feeding these pellets into the cable extruder or only the crosslinking agent is added prior to the hopper, in the hopper or directly in the cable extruder if all other components already have been added in earlier step(s).

According to another preferred embodiment, pellets made of the polyolefin (A) and any further polymeric component(s) without any additional further component(s) are fed to the extruder. Subsequently, fullerene composition (B) and optionally antioxidant(s), cross-linking agent(s) and optionally a scorch retarder, optionally in combination further additive(s) such as a cross-linking booster, are either fed in the hopper or directly fed into the polymeric melt within the cable extruder. The fullerene composition (B) could be added in this step instead, together with the antioxidant(s), cross-linking agent, scorch retarder and the other optional additives used. Alternatively, one or more of these components, i.e. cross-linking agent, scorch retarder, cross-linking booster, antioxidant(s), fullerene composition (B) or a mixture of these components is already added to the pellets before feeding these pellets into the cable extruder, e.g. the components not already present in the fed pellets that should be present in the cable needs to be added at any position in the cable extrusion step.

According to another preferred embodiment, the fullerene composition (B) as described above can also be provided in a master batch which comprises at least a matrix polymer and the fullerene composition (B). Fullerene composition (B) could also be present in the pellets and antioxidant (s), crosslinking agent etc could be added in one or more masterbatches.

The present invention is also therefore directed to the use of a master batch comprising a matrix polymer, and a fullerene composition (B) comprising, e.g. consisting of, any of the embodiments of the fullerene composition (B), as defined herein in the context of the polymer composition of the invention, for production of a layer of a cable or wire in any one of the embodiments described herein.

The master batch is then added to or mixed with the polyolefin (A) and possibly further polymer components and further processed in a known manner to produce an article, such as power cable.

When producing a power cable by extrusion, the polymer composition can be applied onto the metallic conductor and/or at least one coating layer thereof, e.g. a semiconductive layer or insulating layer. Typical extrusion conditions are mentioned in WO 93/08222.

Compounding may be performed by any known compounding process, including extruding the final product with a screw extruder or a kneader.

In a preferred embodiment, the invention relates to a medium, high or extra high voltage cable comprising one

or more conductors in a cable core, an inner semiconducting layer, followed by an insulating layer, and then an outer semiconducting layer, wherein at least one of these layers, preferably the insulating layer, comprises the polyolefin composition as described above.

The term "conductor" means herein above and below that the conductor comprises one or more wires. Moreover, the cable may comprise one or more such conductors. Preferably the conductor is an electrical conductor.

One or more of those layers may also be cross-linked.

In addition to the semiconductive and insulating layers, further layers may be present in medium, high or extra high voltage cables, such as a metallic tape or wire shield, screen(s) and, finally, outermost jacketing layer(s).

The invention relates furthermore to the use of the polyolefin composition in any of the above described embodiments for the production of a layer of a wire or cable, preferably of a layer, more preferably an insulating layer, of a medium, high or extra high voltage cable.

Moreover, the invention relates to the use of the polyolefin composition of the present invention, as described herein, for the production of a layer of a wire or cable.

The invention further relates to the use of the masterbatch comprising a matrix and the fullerene composition as described herein, for the production of a layer of a wire or cable.

The cable or wire comprising a layer which comprises the polyolefin composition according to the present invention comprising the above voltage stabiliser compound is improved especially in electrical breakdown strength and thus achieving an excellent molal voltage stabilisation, measured in the electrical tree testing method described below. This behaviour renders the polyolefin compositions of the present invention highly suitable for the use as medium/high/extra high voltage cable insulation.

Preferred embodiments of this polyolefin composition are those comprising the herein described polyolefins (A) and fullerene composition (B) in any of their herein described embodiments and amounts.

## Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg ($MFR_2$) or 21.6 kg ($MFR_{21}$). The MFR is determined at 230 °C for polypropylenes.

### b) Determination of the Amount of Double Bonds

### A) Quantification of the amount of carbon-carbon double bonds by IR spectroscopy

Quantitative infrared (IR) spectroscopy is used to quantify the amount of carbon-carbon doubles (C=C) bonds. Calibration is achieved by prior determination of the molar extinction coefficient of the C=C functional groups in representative low molecular weight model compounds of known structure. The amount of each of these groups (N) is defined as number of carbon-carbon double bonds per thousand total carbon atoms (C=C/1000C) via:

$$N = (A \times 14\ ) / (E \times L \times D)$$

where A is the maximum absorbance defined as peak height, E the molar extinction coefficient of the group in question ($l \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra are recorded using a FTIR spectrometer (Perkin Elmer 2000) on compression moulded thin (0.5-1.0 mm) films at a resolution of 4 $cm^{-1}$ and analysed in absorption mode.

All quantification is undertaken using the absorption of the C=C-H out-of-plain bend between 910 and 960 cm-1. The specific wave number of the absorption is dependent on the chemical structure of the unsaturation containing species.

1) Polymer compositions comprising polyethylene homopolymers and copolymers, except polyethylene copolymers with > 0.4 wt% polar comonomer

For polyethylenes three types of C=C containing functional groups are quantified, each with a characteristic

absorption and each calibrated to a different model compound resulting in individual extinction coefficients:

- vinyl (R-CH=CH2) via 910 $cm^{-1}$ based on 1-decene [dec-1-ene] giving E = 13.13 $l\cdot mol^{-1}\cdot mm^{-1}$
- vinylidene (RR'C=CH2) via 888 $cm^{-1}$ based on 2-methyl-1-heptene [2-methyhept-1-ene] giving E = 18.24 $l\cdot mol^{-1}\cdot mm^{-1}$
- trans-vinylene (R-CH=CH-R') via 965 $cm^{-1}$ based on trans-4-decene [(E)-dec-4-ene] giving E = 15.14 $l\cdot mol^{-1}\cdot mm^{-1}$

For polyethylene homopolymers or copolymers with < 0.4 wt% of polar comonomer linear baseline correction is applied between approximately 980 and 840 $cm^{-1}$.

2) Polymer compositions comprising polyethylene copolymers with > 0.4 wt% polar comonomer

For polyethylene copolymers with > 0.4 wt% of polar comonomer two types of C=C containing functional groups are quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13
- vinylidene (RR'C=CH2) via 888 $cm^{-1}$ based on 2-methyl-1-heptene [2-methyhept-1-ene] giving E = 18.24 $l\cdot mol^{-1}\cdot mm^{-1}$

EBA:

For poly(ethylene-co-butylacrylate) (EBA) systems linear baseline correction is applied between approximately 920 and 870 $cm^{-1}$.

EMA:

For poly(ethylene-co-methylacrylate) (EMA) systems linear baseline correction was applied between approximately 930 and 870 $cm^{-1}$.

3) Polymer compositions comprising unsaturated low molecular weight molecules

For systems containing low molecular weight C=C containing species direct calibration using the molar extinction coefficient of the C=C absorption in the low molecular weight species itself is undertaken.

**B) Quantification of molar extinction coefficients by IR spectroscopy**

The molar extinction coefficient is determined according to the procedure given in ASTM D3124-98 and ASTM D6248-98. Solution-state infrared spectra are recorded using a FTIR spectrometer (Perkin Elmer 2000) equipped with a 0.1 mm path length liquid cell at a resolution of 4 $cm^{-1}$.
The molar extinction coefficient (E) was determined as $l\cdot mol^{-1}\cdot mm^{-1}$ via:

$$E = A / (C \times L)$$

where A is the maximum absorbance defined as peak height, C the concentration ($mol\cdot l^{-1}$) and L the cell thickness (mm).
At least three 0.18 $mol.l^{-1}$ solutions in carbon disulphide ($CS_2$) are used and the mean value of the molar extinction coefficient determined.

**c) Determination of the Vinyl Content Originating from the Polyunsaturated Compound**

The amount of vinyl groups originating from the polyunsaturated comonomer per 1000 carbon atoms was determined and calculated as follows:
The polymer to be analyzed and a reference polymer have been produced on the same reactor, basically using the same conditions, i.e. similar peak temperatures, pressure and production rate, but with the only difference that the polyunsaturated comonomer is added to polymer to be analysed and not added to reference polymer. The total amount of vinyl groups of each polymer was determined by FT-IR measurements, as described above. Then, it is assumed that the base level of vinyl groups, i.e. the ones formed by the process and from chain transfer agents resulting in vinyl groups

(if present), is the same for the reference polymer and the polymer to be analyzed with the only exception that in the polymer to be analyzed also a polyunsaturated comonomer is added to the reactor. This base level is then subtracted from the measured amount of vinyl groups in the polymer to be analyzed, thereby resulting in the amount of vinyl groups/1000 carbon atoms, which result from the polyunsaturated comonomer.

**d) Density**

The density was measured according to ISO 1183-1 / method A. The sample preparation was executed according to ISO 1872-2 Table 3 Q (compression moulding).

**Examples**

The following examples serve to further illustrate the present invention. Unless otherwise specified all the reagents are commercially available or can be produced according to methods well known in the literature.

**Inventive Example 1 (IE1):** a polyolefin composition comprising: a polyolefin (A), a fullerene composition (B) which comprises [60]PCBM

Phenyl-$C_{61}$-Butyric-Acid-Methyl-Ester ([60]PCBM) was used as purchased from Solenne BV (purity > 99%).

**Inventive Example 2 (IE2):** a polyolefin composition comprising: a polyolefin (A), a fullerene composition (B) which comprises $C_{60}$fullerene

$C_{60}$ fullerene was used as purchased from Solenne BV (purity > 99%).

**Production and Testing of Compositions**

The polyolefin compositions of the present invention (Inventive Examples 1 and 2, i.e. IE1 and IE2) are tested together with a reference composition comprising 4,4'-di(dodecyloxy)benzil (Comparative Example 2) (CE2) described in EP2545114 as voltage stabilizer.

A polymer without voltage stabilizer is used as base reference material (Comparative Example 1) (CE1).

The test arrangements are the same for the reference polymers and for the tested fullerene composition.

A commercially available cross-linkable polyethylene with the grade name, LS4201S, supplied by Borealis, Sweden, which is prepared by high pressure polymerization and had a density of 0.922 g/$cm^3$ (ISO1872-2/ISO1183-2), $MFR_2$ (ISO 1133, load 2.16 kg, at 190 °C) of 2 g/10 min is used as base reference (comparative example 1, i.e. CE1) and as the polymer for preparing the compositions of comparative example 2 (CE2) and inventive Examples 1 and 2 (IE1 and IE2).

The base reference polymer is in a form of pellets which contains dicumyl peroxide as a cross-linking agent. Before use, the pellets are ground to fine powder in a Retsch ZM-1 centrifugal mill with a 500 micrometer sieve. In the cases where voltage stabilizers are added, the powder is impregnated with the stabilizer dissolved in dichloromethane (inventive Example 1 and comparative Example 2), or in chloroform (inventive Example 2), for one hour while agitated manually for about 30 s every 15 minutes. The solvent is then removed by means of rotary evaporation and vacuum oven to obtain a dry powder with a homogeneously distributed voltage stabiliser.

The test objects are prepared by compression moulding in two steps. In the first step, the polyethylene powder is formed to suitable shapes by melting at 130 °C and 10 kN press force for three minutes followed by 200 kN during another three minutes. A tungsten wire electrode with a diameter of 10 $\mu$m is then applied between two of the pre-pressed polymer pieces (30mm x 14mm x 1.5mm) and fastened with a piece of aluminium tape used as high voltage connection during the electrical treeing tests, as shown in Figure 1. In the second step the material is first melted at 130 °C during fifteen minutes to reduce the influence of interfaces between the pre-pressed blocks after which the temperature is ramped up to 180 °C and held for fifteen minutes for cross linking to take place. The press force is increased to 200 kN during the cross linking to inhibit the formation of gas filled voids from the cross linking by-products.

This procedure yield the wire electrode test object illustrated in Figure 2. To make the thermal history of the test objects as similar as possible, the samples are remelted at 130 °C in an oven and are allowed to cool slowly by switching the oven off.

**Electrical Treeing Evaluation**

Testing of electrical tree initiation field is performed in a setup, illustrated in Figure 3, under 50 Hz AC voltage

ramping regime with a ramp rate of 20 V/s (rms). A 30 kV step-up variable transformer is used as voltage supply. To limit short circuit currents a water resistor of approximately 200 kΩ is connected in series with the tested object.

The electrical tree initiation tests are performed in transformer oil in a custom made container with optical detection system shown in Figure 4. The ramp speeds used are measured prior to testing. The treeing process is optically observed using a microscope coupled with a CCD camera, recording the process at 2 frames per second at a resolution of 2048 x 1532 pixels allowing detection of trees smaller than 10 μm for accurate determination of their initiation. The measurements are performed at ambient conditions.

The tree initiation field strength at the wire electrode is calculated from the applied voltage level using a simplified field enhancement factor of 21 $mm^{-1}$. This factor is calculated using 3D numerical simulations of the maximum electrical field in the test object using a finite element based software, Comsol Multiphysics.

The % improvement of the tree initiation field is calculated from the sum of the scale and the threshold parameter compared to the reference material (CE1) yielded by fitting the dataset to a 3-parameter Weibull distribution, using the maximum likelihood method in the software Minitab® version 16.2.4 in accordance with IEEE Std930TM-2004, "IEEE Guide for the Statistical Analysis of Electrical Breakdown Data". From every test object, four trees are used for calculating the tree initiation fields and trees growing in the immediate proximity of visible defects in the material or on the wire electrode are censored.

The gel-content of the crosslinked samples is determined gravimetrically using a solvent extraction technique. The samples (~100 mg) are placed in pre-weighed 100 mesh stainless steel baskets, and extracted in 1.1 $dm^3$ boiling decahydronaphthalene for 6 h. An antioxidant, 10 g Irganox 1076 from BASF, is added to prevent degradation. After 6h, the solvent is exchanged for 0.9 $dm^3$ new decahydronaphthalene (pre-heated) and the extraction continued for another two hours. The samples are left to evaporate at room temperature for one week under ventilation and finally dried under vacuum for 72h at 40 °C. After this period a constant weight is reached. The non-soluble fraction left in the baskets is weighed, and the gel-content of the polymers is calculated.

**Results**

From Table 1, it can be seen that the CE2 has roughly the same tree initiation field as inventive example 1 (IE1), and about 10 % higher than inventive example 2 (IE2), however when looking at the concentration on a mass scale (wt%), it shall be noted that the inventive example 1 (IE1) has less than a fifth, and inventive example 2 (IE2) less than an eight, respectively, of the amount voltage stabilizer added. It is also seen in Table 2 that the cross-linking performance is in the same range as for the CE1.

Table 1

| | Number of samples | cone [mmol/kg] | conc [wt%] | Tree init [kV/mm] | Difference to Ref | % Increase from Ref |
|---|---|---|---|---|---|---|
| CE1 | 56 | 0 | 0 | 296 | 0 | 0 |
| CE2 | 60 | 10 | 0.58 | 376 | 81 | 27 |
| IE1 | 28 | 1.1 | 0.1 | 372 | 75 | 25 |
| IE2 | 20 | 1 | 0.072 | 340 | 44 | 15 |

Table 2

| **Material** | ***Gel content*** (%) |
|---|---|
| CE1 | 82 |
| IE1 | 85 |
| IE2 | 86 |

**Claims**

**1.** A cable or wire comprising a layer which comprises a polyolefin composition comprising

a polyolefin (A), and
a fullerene composition (B) which comprises:

a $C_{60}$ fullerene or a $C_{60}$ chemical derivative selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or
a $C_{70}$ fullerene or a $C_{70}$ chemical derivative selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or
a blend of fullerenes.

**2.** The cable or wire according to claim 1, wherein the fullerene composition (B) is

a $C_{60}$ fullerene or a $C_{60}$ chemical derivative selected from the group consisting of methanofullerene derivatives, PCBM derivatives, ThCBM derivatives, and Prato derivatives; or
a $C_{70}$ fullerene or a $C_{70}$ chemical derivative selected from the group consisting of methanofullerene derivatives, PCBM derivatives, ThCBM derivatives and Prato derivatives.

**3.** The cable or wire according to claim 1, wherein the fullerene composition (B) is

a $C_{60}$ fullerene or a $C_{60}$ chemical derivative selected from the group consisting of methanofullerene derivatives and PCBM derivatives; or
a $C_{70}$ fullerene or a $C_{70}$ chemical derivative selected from the group consisting of methanofullerene derivatives and PCBM derivatives.

**4.** The cable or wire according to any of the preceding claims, wherein the fullerene composition (B) is

a $C_{60}$ fullerene or Phenyl-$C_{61}$-butyric acid methyl ester ([60]PCBM); or
a $C_{70}$ fullerene or Phenyl-$C_{71}$-butyric acid methyl ester (the [70]PCBM analogue of [60]PCBM).

**5.** The cable or wire according to claim 4, wherein the fullerene composition (B) is a $C_{60}$ fullerene or [60]PCBM.

**6.** The cable or wire according to claim 1, wherein the fullerene composition (B) comprises a blend of fullerenes, wherein said blend may comprises about 80% wt of [60]PCBM, about 20% wt of [70]PCBM, and, optionally, small quantities of chemical derivatives of said higher fullerenes, e.g. higher PCBM.

**7.** The cable or wire according to claim 1, wherein the fullerene composition (B) comprises a blend of fullerenes, wherein said blend may comprises about 65% wt of [60]PCBM, about 30% wt of [70]PCBM, and about 5% wt of chemical derivatives of said higher fullerenes, e.g. higher PCBM.

**8.** The cable according to any one of claims 1 to 7 wherein the cable is a medium, high or extra high voltage cable comprising an inner semiconductive layer, an insulating layer and an outer semiconductive layer.

**9.** The cable or wire according to claim 8 wherein at least the insulating layer comprises a polyolefin composition according to any one of claims 1 to 7.

**10.** Use of the polyolefin composition according to any one of claims 1 to 7 for the production of a layer of a cable or wire.

**11.** Use of a masterbatch comprising (i) a matrix polymer and (ii) a fullerene composition (B) which comprises:

a $C_{60}$ fullerene or a $C_{60}$ chemical derivative selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or
a $C_{70}$ fullerene or a $C_{70}$ chemical derivative selected from the group consisting of methanofullerene derivatives, PCBM derivatives, ThCBM derivatives, Prato derivatives, Bingel derivatives, diazoline derivatives, azafulleroid derivatives, ketolactam derivatives, and Diels-Alder derivatives; or
a blend of fullerenes, for the production of a layer of a cable or wire according to any one of claims 1 to 9.

**Patentansprüche**

1. Kabel oder Draht, das bzw. der eine Schicht umfasst, die eine Polyolefin-Zusammensetzung enthält, die umfasst:

   ein Polyolefin (A), und
   eine Fulleren-Zusammensetzung (B), die umfasst:

   ein $C_{60}$-Fulleren oder ein chemisches $C_{60}$-Derivat, das aus der Gruppe ausgewählt ist, die Methanfulleren-Derivate, PCBM-Derivate, ThCBM-Derivate, Prato-Derivate, Bingel-Derivate, Diazolin-Derivate, Azafulleroid-Derivate, Ketolactam-Derivate und Diels-Alder-Derivate umfasst, oder
   ein $C_{70}$-Fulleren oder ein chemisches $C_{70}$-Derivat, das aus der Gruppe ausgewählt ist, die Methanfulleren-Derivate, PCBM-Derivate, ThCBM-Derivate, Prato-Derivate, Bingel-Derivate, Diazolin-Derivate, Azafulleroid-Derivate, Ketolactam-Derivate und Diels-Alder-Derivate umfasst, oder
   eine Mischung aus Fullerenen.

2. Kabel oder Draht nach Anspruch 1, wobei die Fulleren-Zusammensetzung (B) ist:

   ein $C_{60}$-Fulleren oder ein chemisches $C_{60}$-Derivat, das aus der Gruppe ausgewählt ist, die Methanfulleren-Derivate, PCBM-Derivate, ThCBM-Derivate und Prato-Derivate umfasst, oder
   ein $C_{70}$-Fulleren oder ein chemisches $C_{70}$-Derivat, das aus der Gruppe ausgewählt ist, die Methanfulleren-Derivate, PCBM-Derivate, ThCBM-Derivate und Prato-Derivate umfasst.

3. Kabel oder Draht nach Anspruch 1, wobei die Fulleren-Zusammensetzung (B) ist:

   ein $C_{60}$-Fulleren oder ein chemisches $C_{60}$-Derivat, das aus der Gruppe ausgewählt ist, die Methanfulleren-Derivate und PCBM-Derivate umfasst, oder
   ein $C_{70}$-Fulleren oder ein chemisches $C_{70}$-Derivat, das aus der Gruppe ausgewählt ist, die Methanfulleren-Derivate und PCBM-Derivate umfasst.

4. Kabel oder Draht nach einem der vorstehenden Ansprüche, wobei die Fulleren-Zusammensetzung (B) ist:

   ein $C_{60}$-Fulleren oder Phenyl-$C_{61}$-Butylsäuremethylester ([60]PCBM), oder
   ein $C_{70}$-Fulleren oder Phenyl-$C_{71}$-Butylsäuremethylester (das [70]PCBM)-Analogon von ([60]PCBM).

5. Kabel oder Draht nach Anspruch 4, wobei die Fulleren-Zusammensetzung (B) ein $C_{60}$-Fulleren oder [60]PCBM ist.

6. Kabel oder Draht nach Anspruch 1, wobei die Fulleren-Zusammensetzung (B) eine Mischung aus Fullerenen enthält, wobei die Mischung ungefähr 80 Gewichtsprozent [60]PCBM, ungefähr 20 Gewichtsprozent [70]PCBM und optional kleine Mengen von chemischen Derivaten der höheren Fullerene wie z.B. eines höheren PCBM umfassen kann.

7. Kabel oder Draht nach Anspruch 1, wobei die Fulleren-Zusammensetzung (B) eine Mischung aus Fullerenen umfasst, wobei die Mischung ungefähr 65 Gewichtsprozent [60]PCBM, ungefähr 30 Gewichtsprozent [70]PCBM und ungefähr 5 Gewichtsprozent chemische Derivate der höheren Fullerene wie z.B. eines höheren PCBM umfassen kann.

8. Kabel nach einem der Ansprüche 1 bis 7, wobei das Kabel ein Mittel-, Hoch- oder Höchstspannungskabel ist, das eine innere halbleitende Schicht, eine isolierende Schicht und eine äußere halbleitende Schicht umfasst.

9. Kabel oder Draht nach Anspruch 8, wobei wenigstens die isolierende Schicht eine Polyolefin-Zusammensetzung gemäß einem der Ansprüche 1 bis 7 enthält.

10. Verwendung der Polyolefin-Zusammensetzung gemäß einem der Ansprüche 1 bis 7 für die Erzeugung einer Schicht eines Kabels oder eines Drahts.

11. Verwendung eines Masterbatches, das (i) ein Matrix-Polymer und (ii) eine Fulleren-Zusammensetzung (B) umfasst, wobei die Fulleren-Zusammensetzung (B) umfasst:

    ein $C_{60}$-Fulleren oder ein chemisches $C_{60}$-Derivat, das aus der Gruppe ausgewählt ist, die Methanfulleren-Derivate, PCBM-Derivate, ThCBM-Derivate, Prato-Derivate, Bingel-Derivate, Diazolin-Derivate, Azafulleroid-Derivate, Ketolactam-Derivate und Diels-Alder-Derivate umfasst, oder
ein $C_{70}$-Fulleren oder ein chemisches $C_{70}$-Derivat, das aus der Gruppe ausgewählt ist, die Methanfulleren-Derivate, PCBM-Derivate, ThCBM-Derivate, Prato-Derivate, Bingel-Derivate, Diazolin-Derivate, Azafulleroid-Derivate, Ketolactam-Derivate und Diels-Alder-Derivate umfasst, oder
eine Mischung aus Fullerenen, für die Erzeugung einer Schicht eines Kabels oder eines Drahts gemäß einem der Ansprüche 1 bis 9.

## Revendications

**1.** Câble ou fil comprenant une couche qui comprend une composition de polyoléfine comprenant

une polyoléfine (A), et
une composition de fullerène (B) qui comprend :

un fullerène en $C_{60}$ ou un dérivé chimique en $C_{60}$ choisi dans le groupe constitué par les dérivés de méthanofullerène, les dérivés de PCBM, les dérivés de ThCBM, les dérivés de Prato, les dérivés de Bingel, les dérivés de diazoline, les dérivés d'azafulléroïde, les dérivés de cétolactame et les dérivés de Diels-Alder ; ou
un fullerène en $C_{70}$ ou un dérivé chimique en $C_{70}$ choisi dans le groupe constitué par les dérivés de méthanofullerène, les dérivés de PCBM, les dérivés de ThCBM, les dérivés de Prato, les dérivés de Bingel, les dérivés de diazoline, les dérivés d'azafulléroïde, les dérivés de cétolactame et les dérivés de Diels-Alder ; ou
un mélange de fullerènes.

**2.** Câble ou fil selon la revendication 1, dans lequel la composition de fullerène (B) est

un fullerène en $C_{60}$ ou un dérivé chimique en $C_{60}$ choisi dans le groupe constitué par les dérivés de méthanofullerène, les dérivés de PCBM, les dérivés de ThCBM, et les dérivés de Prato ; ou
un fullerène en $C_{70}$ ou un dérivé chimique en $C_{70}$ choisi dans le groupe constitué par les dérivés de méthanofullerène, les dérivés de PCBM, les dérivés de ThCBM, et les dérivés de Prato.

**3.** Câble ou fil selon la revendication 1, dans lequel la composition de fullerène (B) est

un fullerène en $C_{60}$ ou un dérivé chimique en $C_{60}$ choisi dans le groupe constitué par les dérivés de méthanofullerène et les dérivés de PCBM ; ou
un fullerène en $C_{70}$ ou un dérivé chimique en $C_{70}$ choisi dans le groupe constitué par les dérivés de méthanofullerène et les dérivés de PCBM.

**4.** Câble ou fil selon l'une quelconque des revendications précédentes, dans lequel la composition de fullerène (B) est

un fullerène en $C_{60}$ ou un ester méthylique d'acide phényl-$C_{61}$-butyrique ([60]PCBM) ; ou
un fullerène en $C_{70}$ ou un ester méthylique d'acide phényl-C7i-butyrique (le [70]PCBM analogue du [60]PCBM).

**5.** Câble ou fil selon la revendication 4, dans lequel la composition de fullerène (B) est un fullerène en $C_{60}$ ou [60]PCBM.

**6.** Câble ou fil selon la revendication 1, dans lequel la composition de fullerène (B) comprend un mélange de fullerènes, dans lequel ledit mélange peut comprendre environ 80 % en poids de [60]PCBM, environ 20 % en poids de [70] PCBM, et, éventuellement, de petites quantités de dérivés chimiques desdits fullerènes supérieurs, par exemple de PCBM supérieur.

**7.** Câble ou fil selon la revendication 1, dans lequel la composition de fullerène (B) comprend un mélange de fullerènes, dans lequel ledit mélange peut comprendre environ 65 % en poids de [60]PCBM, environ 30 % en poids de [70] PCBM, et environ 5 % en poids de dérivés chimiques desdits fullerènes supérieurs, par exemple de PCBM supérieur.

**8.** Câble selon l'une quelconque des revendications 1 à 7, dans lequel le câble est un câble à moyenne, haute ou très haute tension comprenant une couche semi-conductrice interne, une couche isolante et une couche semi-conductrice externe.

**9.** Câble ou fil selon la revendication 8, dans lequel au moins la couche isolante comprend une composition de polyoléfine selon l'une quelconque des revendications 1 à 7.

**10.** Utilisation de la composition de polyoléfine selon l'une quelconque des revendications 1 à 7 pour la production d'une couche d'un câble ou d'un fil.

**11.** Utilisation d'un mélange maître comprenant (i) un polymère de matrice et (ii) une composition de fullerènes (B) qui comprend :

un fullerène en $C_{60}$ ou un dérivé chimique en $C_{60}$ choisi dans le groupe constitué par les dérivés de méthanofullerène, les dérivés de PCBM, les dérivés de ThCBM, les dérivés de Prato, les dérivés de Bingel, les dérivés de diazoline, les dérivés d'azafulléroïde, les dérivés de cétolactame et les dérivés de Diels-Alder ; ou
un fullerène en $C_{70}$ ou un dérivé chimique en $C_{70}$ choisi dans le groupe constitué par les dérivés de méthanofullerène, les dérivés de PCBM, les dérivés de ThCBM, les dérivés de Prato, les dérivés de Bingel, les dérivés de diazoline, les dérivés d'azafulléroïde, les dérivés de cétolactame et les dérivés de Diels-Alder ; ou
un mélange de fullerènes, pour la production d'une couche d'un câble ou d'un fil selon l'une quelconque des revendications 1 à 9.

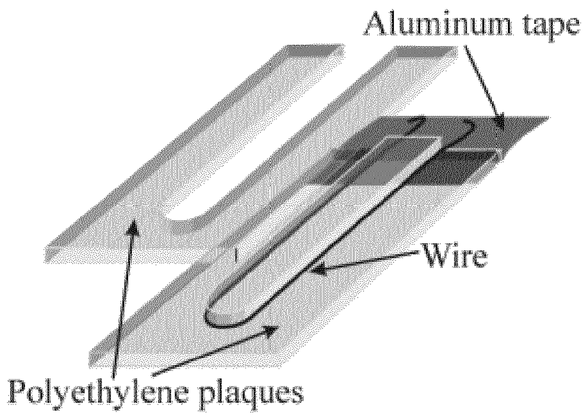


Figure 1

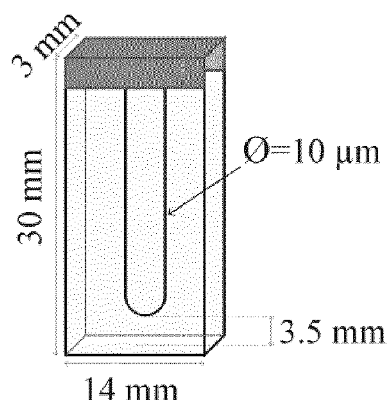


Figure 2

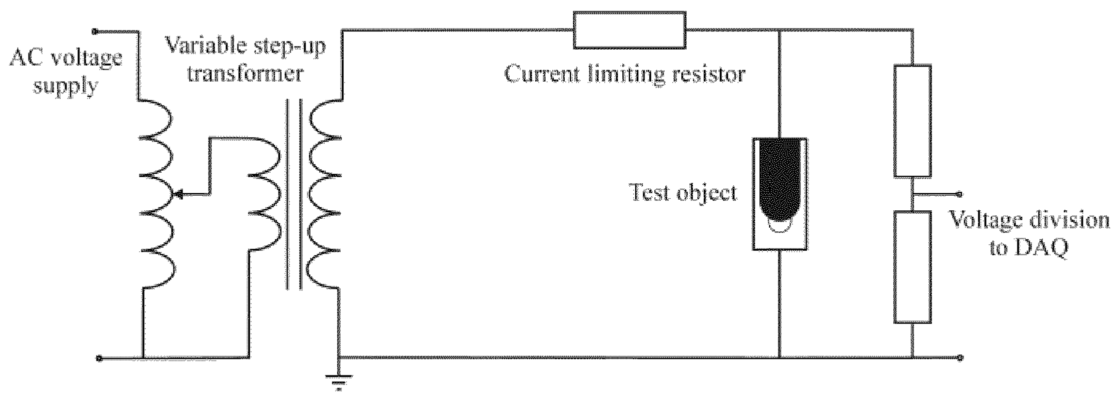


Figure 3

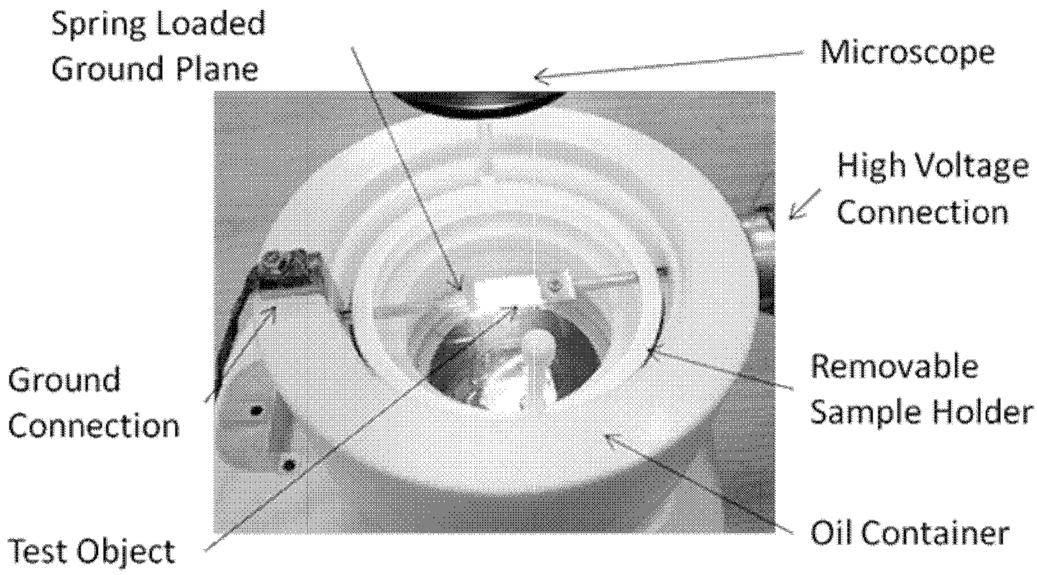
Spring Loaded
Ground Plane
Microscope
High Voltage
Connection
Ground
Connection
Removable
Sample Holder
Oil Container
Test Object

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2545114 A
- US 8435713 B
- WO 9308222 A


### Non-patent literature cited in the description


- **A.C. ASHCRAFT ; R.M. EICHHORN ; S.R.G.** Laboratory Studies of Treeing in Solid Dielectrics and Voltage Stabilization of Polyethylene. *I.E.E.E. International Symposium on Electrical Insulation, Montreal, Canada,* 1978